# EUROPÄISCHE PATENTSCHRIFT

(11) **EP 1 747 156 B1**
(45) Veröffentlichungstag und Bekanntmachung des Hinweises auf die Patenterteilung: **12.11.2008**
(21) Anmeldenummer: 05732327.1
(22) Anmeldetag: 18.04.2005
(51) Int. Cl.: B65G 49/04

(54) **ANLAGE UND VERFAHREN ZUM BEFÖRDERN VON WERKSTÜCKEN ENTLANG EINER BEHANDLUNGSSTRECKE**
UNIT AND METHOD FOR CONVEYING WORKPIECES ALONG A PROCESSING RUN
UNITE ET PROCEDE POUR TRANSPORTER DES PIECES SUR UN PARCOURS DE TRAITEMENT

(30) Priorität: 18.05.2004 DE 102004024614
(43) Veröffentlichungstag der Anmeldung: 31.01.2007
(73) Patentinhaber: Dürr Systems GmbH, 70435 Stuttgart (DE)
(72) Erfinder: MÜLLER, Herbert, 61200 Wölfersheim (DE); WINKLER, Jürgen, 35519 Rockenberg (DE); KROMBHOLZ, Klaus, 78333 Stockach (DE)
(74) Vertreter: HOFFMANN EITLE
(86) Internationale Anmeldenummer: PCT/EP2005/004106
(87) Internationale Veröffentlichungsnummer: WO 2005/115886

(56) Entgegenhaltungen:
- DE-A1- 10 054 366
- US-A1- 2003 097 982

## Beschreibung

### Technisches Gebiet

Die Erfindung betrifft eine Anlage sowie ein Verfahren zum Befördern von Werkstücken auf einer Behandlungsstrecke gemäß dem Oberbegriff der Ansprüche 1 und 18.

Entlang einer solchen Behandlungsstrecke befinden sich zumindest eine, meist aber mehrere aufeinanderfolgende Behandlungsstationen, in die die Werkstücke zur Oberflächenbehandlung eingebracht werden.

Eine Behandlungsstation kann beispielsweise ein Tauchbad mit einer Behandlungsflüssigkeit sein, jedoch ist unter dem Begriff Behandlungsstation auch jede andere Art von Kabine oder Becken zu verstehen, in der eine Behandlung des Werkstücks erfolgt. Eine derartige Behandlung kann zum Beispiel auch einen Waschvorgang umfassen. Andere Beispiele für Behandlungen sind eine Tauchphosphatierung, Vorbehandlung für eine Tauchlackierung, Pulverbeschichtung, Nasslackbeschichtung und ähnliches.

### Stand der Technik

Bisher bekannte Anlagen zur Oberflächenbehandlung von Werkstücken wie Fahrzeugkarosserien in Tauchbädern oder Behandlungskabinen werden in kontinuierlich fördernde Anlagen sowie nicht kontinuierlich fördernde Anlagen unterteilt.

Bei kontinuierlich fördernden Anlagen werden die Karosserien mit einem Kettenantrieb in einer Förderrichtung entlang der Behandlungsstrecke gefördert und währenddessen in die Tauchbäder abgesenkt, durch die Tauchbäder gefördert und wieder aus den Tauchbädern gehoben. Eine kontinuierlich fördernde Anlage zur Oberflächenbehandlung von Fahrzeugkarosserien ist in der DE-A-196 41 048 beschrieben. In dieser Anlage werden die Fahrzeugkarosserien von Gestellen gehalten, die in festem Abstand zueinander beispielsweise durch eine umlaufende Kette oberhalb der Behandlungsbecken entlang einer Führungsbahn geführt werden. Zum Ein- und Ausbringen der Fahrzeugkarosserien in die Becken und aus den Becken werden die Gestelle gedreht. Die entsprechenden Drehachsen der Gestelle sind dabei parallel zur Förderrichtung ausgerichtet. Es besteht auch die Möglichkeit, die Gestelle für die Rückführung um 90° abzuklappen, um Platz zu sparen.

In der Technik sind auch nicht kontinuierlich fördernde Anlagen bekannt, die als Taktanlagen bezeichnet werden. Bei Taktanlagen werden die Fahrzeugkarosserien auf Trägern über die Tauchbecken gefahren, dort gestoppt und mit Hilfe von Hebevorrichtungen, wie beispielsweise Hebeanlagen oder Drehvorrichtungen, in das Behandlungsbad eingetaucht und nach der Prozesszeit wieder herausgehoben bzw. herausgedreht. Beispiele für eine derartige Anlage sind in DE-C-43 04 145 und DE-U-200 22 634 sowie PCT/EP 2002/001782 beschrieben. Das Dokument DE-A-10 054 366 offenbard eine Anlage zum Befördern von Werkstücken auf einer Behandlungsstrecke gemäß dem Oberbegriff des Anspruchs 1.

Bei einigen der bisher bekannten kontinuierlich und nicht kontinuierlich fördernden Anlagen werden das Einbringen der Karosserien in die Tauchbecken und das Ausbringen der Karosserien aus den Tauchbecken durch Drehen der exzentrisch auf dem Karosserieträger angeordneten Karosserien um eine quer zur Förderrichtung liegende Drehachse realisiert. Die Bewegung, die das Werkstück durch das Tauchbad hindurch vollzieht, ist dabei völlig anders als bei der oben beschriebenen Anlage der DE-A-196 41 048, in der die Drehachse parallel zur Förderrichtung verläuft. Die Karosserieträger sind dann beispielsweise auf zwei Führungsbahnen abgestützt, die links und rechts neben den Tauchbecken angeordnet sind. Die Karosserieträger können dann zur Beförderung an zwei umlaufenden Ketten befestigt sein, die über Kettenräder mit horizontaler Drehachse angetrieben bzw. umgelenkt werden, die am Anfang und am Ende der Behandlungsstrecke angeordnet sind. Am Ende der Behandlungsstrecke werden die unbeladenen Karosserieträger über die Kettenräder umgelenkt und unter den Tauchbecken zurückgeführt.

Die Wahl zwischen einer kontinuierlich fördernden und einer nicht kontinuierlich fördernden Anlage muss unter Berücksichtigung der spezifischen Vor- und Nachteile beider Grundkonzepte getroffen werden. So sind die kontinuierlich fördernden Anlagen zuverlässiger, da die Anlagen mit wenigen Antriebsmotoren laufen, während die individuell getakteten Träger von Taktanlagen durch mehrere einzeln gesteuerte Motoren eine erhöhte Ausfallwahrscheinlichkeit besitzen. Auch ist der maximale Durchsatz von Werkstücken pro Zeiteinheit bei den kontinuierlichen Anlagen höher als bei den Taktanlagen. Der Vorteil der Taktanlagen liegt hingegen in der hohen Flexibilität der Werkstückbehandlung durch die Möglichkeit der Einzelansteuerung der einzelnen Träger.

Die vorliegende Erfindung richtet sich vor allem auf kontinuierlich fördernde Anlagen, ist aber ohne weiteres auch auf nicht kontinuierlich fördernde Anlagen anwendbar.

### Darstellung der Erfindung

Der vorliegenden Erfindung liegt die Aufgabe zugrunde, eine Anlage sowie ein Verfahren zum Befördern eines Werkstücks entlang einer Behandlungsstrecke zu schaffen, mit denen die Rückführung der unbeladenen Werkstückträger auf platzsparende Art und Weise erfolgen kann.

Diese Aufgabe wird gelöst mittels einer Anlage gemäß dem Patentanspruch 1.

Demzufolge weist die erfindungsgemäße Anlage zum Befördern eines Werkstücks entlang einer Behandlungsstrecke zumindest einen Transportwagen auf, der in einer Förderrichtung entlang der Behandlungsstrecke bewegbar ist. Eine Drehwelle ist an dem Transportwagen in der Nähe eines ersten ihrer Enden und im rechten Winkel zur Förderrichtung um ihre Achse drehbar gelagert. An der Drehwelle ist eine Halterung für das zu behandelnde Werkstück vorgesehen. Erfindungsgemäß ist die Drehwelle nur in der Nähe ihres ersten Endes an dem Transportwagen gelagert und so in Förderrichtung antreibbar, wohingegen ihr zweites, freies Ende passiv in Förderrichtung mitbewegt wird.

Demnach ist nur ein Ende der Drehwelle mit dem Transportwagen verbunden. Zur Beförderung des Werkstücks an der Drehwelle in Förderrichtung ist somit nur ein Transportwagen notwendig, der sich entlang einer einzigen Führungsbahn bewegen und mittels einer einzigen Förderkette oder eines einzigen Förderriemens angetrieben sein kann.

Antriebs- und Umlenkräder am Anfang und Ende der Behandlungsstrecke können dadurch entweder mit horizontaler oder mit vertikaler Achse ausgeführt werden.

Die erfindungsgemäße Anordnung der Drehwelle, in der das zweite Ende frei bleibt, ermöglicht insbesondere auch ein Verschwenken der unbeladenen Drehwelle vor oder während der Umlenkung aus der horizontalen in die vertikale Lage und ein platzsparendes Zurückführen neben der Behandlungsstrecke. Diese und weitere vorteilhafte Merkmale der erfindungsgemäßen Anlage sind in den abhängigen Ansprüchen 2 bis 17 beschrieben.

Die Drehwelle ist vorzugsweise so angeordnet, dass sie zumindest teilweise in einer im rechten Winkel zur Förderrichtung verlaufenden Ebene verschwenkbar ist. Dabei kann der Transportwagen zusammen mit der gesamten Drehwelle in dieser Ebene verschwenkbar angeordnet sein, und/oder die Drehwelle kann einen Klappmechanismus aufweisen, mittels dessen das zweite Ende der Drehwelle in dieser Ebene verschwenkbar ist. Die letztgenannte Variante ermöglicht das Verschwenken der Welle mit relativ geringem konstruktionalem Aufwand.

Das zweite Ende der Drehwelle kann mit einem nicht angetriebenen Stützelement versehen sein, das auf einer Stützfläche ablaufen kann, beispielsweise auf einem ohnehin vorhandenen Rand eines Tauchbeckens. Im Falle einer solchen Unterstützung des freien Endes der Welle sind die auf den Werkstückträger wirkenden Belastungen reduziert.

Die Drehbewegung der Drehwelle um ihre Achse kann geeignet über einen Drehantrieb mit der Bewegung des Transportwagens in Förderrichtung gekoppelt sein; dies hat den Vorteil, dass kein separater Antrieb zur Erzeugung dieser Drehbewegung notwendig ist und der Energiebedarf geringer ist. Der Drehantrieb kann dabei beispielsweise ein Rollenhebel sein. Auch Varianten mit einem Getriebe sind denkbar, das eine gewisse Anpassung der Drehbewegung der Drehwelle ermöglicht.

Es kann jedoch auch ein separater Drehantrieb, beispielsweise ein elektrischer Antrieb, zur Erzeugung der Drehung der Drehwelle um ihre Achse vorgesehen sein. Diese.Drehung kann dann völlig unabhängig von der Bewegung des Transportwagens in Förderrichtung erfolgen.

Die erfindungsgemäße Anlage ist vorzugsweise mit Mitteln zur Kompensation des durch das an der Drehwelle angebrachten Werkstücks erzeugten Drehmoments versehen. Beispielsweise kann ein Gegengewicht am ersten Ende der Drehwelle zur Kompensation des Drehmoments vorgesehen sein, und zwar vorzugsweise über einen Träger so, dass sein Abstand zur Drehachse der Drehwelle variabel ist. Auch die Verwendung eines Hebel-Feder-Mechanismus zur Kompensation des Drehmoments ist möglich.

Die oben genannte Aufgabe wird zum anderen durch ein Verfahren zum Befördern eines Werkstücks entlang einer Behandlungsstrecke gemäß dem Anspruch 18 gelöst.

Demzufolge wird zunächst ein Transportwagen in eine Ausgangsposition verfahren. Dort wird ein zu behandelndes Werkstück an einer Drehwelle angebracht, die im Bereich eines ersten ihrer Enden drehbar an dem Transportwagen gelagert ist. Der Transportwagen wird nun entlang einer Behandlungsstrecke in einer Förderrichtung bewegt, wobei die Drehwelle rechtwinklig zu dieser Förderrichtung ausgerichtet ist. In einer Übergabeposition wird das Werkstück nach der Behandlung von der Drehwelle gelöst. Anschließend wird die Drehwelle erfindungsgemäß in einer im rechten Winkel zur Förderrichtung verlaufenden Ebene verschwenkt, und der Transportwagen wird mit der Drehwelle in die Ausgangsposition zurückgeführt.

Die Drehwelle kann für ihre Rückführung somit in eine platzsparende Ausrichtung verschwenkt werden.

Bevorzugte Weiterbildungen des erfindungsgemäßen Verfahrens sind in den zugehörigen abhängigen Ansprüchen beschrieben.

Der Transportwagen kann während des Verschwenkens oder anschließend an das Verschwenken auf eine Rückführstrecke umgelenkt werden, dort zurückgeführt werden und zum Erreichen der Ausgangsposition wiederum umgelenkt und in seine ursprüngliche Position verschwenkt werden. Diese Abfolge ermöglicht eine besonders platzsparende Rückführung des Transportwagens mit der Drehwelle.

Falls ein Teilbereich der Drehwelle, der das zweite Ende der Drehwelle einschließt, in dieser Ebene verschwenkt wird, kann dieser Teilbereich der Drehwelle während des Verschwenkens oder anschließend an das Verschwenken auf eine Rückführstrecke umgelenkt werden, für die Rückführung parallel zur Förderrichtung ausgerichtet werden, und zum Erreichen der Ausgangsposition wiederum umgelenkt und in seine ursprüngliche Position verschwenkt werden. Die Ausrichtung der Welle parallel zur Förderrichtung während der Rückführung führt dazu, dass senkrecht zur Förderrichtung noch weit weniger Platzbedarf besteht.

### Kurze Beschreibung der Zeichnungen

- Fig. 1: ist eine schematische Gesamtansicht einer erfindungsgemäßen Anlage zum Transportieren von Werkstücken,
- Fig. 2: ist eine perspektivische Ansicht einer ersten Ausführungsform eines Transportwagens, der Teil der erfindungsgemäßen Anlage ist,
- Fig. 3a: zeigt den Transportwagen aus Fig. 2 in Kombination mit einer Drehwelle und einem Rollenhebel,
- Fig. 3b: zeigt den Transportwagen aus Fig. 2 in Kombination mit einer Drehwelle und einem elektrischen Antrieb,
- Fig. 4a: zeigt eine erste Möglichkeit zur Erzeugung der Drehung der Drehwelle in der Frontansicht,
- Fig. 4b: ist die zugehörige Seitenansicht,
- Fig. 5a: zeigt eine zweite Möglichkeit zur Erzeugung der Drehung der Drehwelle in der Frontansicht,
- Fig. 5b: ist die zugehörige Seitenansicht,
- Fig. 6a-e: sind verschiedene Ansichten eines 45°-Umlenkmechanismus,
- Fig. 7a-d: sind verschiedene Ansichten eines 90°-Umlenkmechanismus,
- Fig. 8a: ist eine Seitenansicht einer erfindungsgemäßen Anlage mit einer abklappbaren Drehwelle,
- Fig. 8b: ist die zugehörige Draufsicht,
- Fig. 8c: ist die gleiche Ansicht wie Fig. 8a, zeigt die Drehwelle aber im abgeklappten Zustand, und
- Fig. 9: sind verschiedene Ausführungsformen eines Mechanismus' zur Drehmomentkompensation.

### Ausführliche Beschreibung von bevorzugten Ausführungsformen

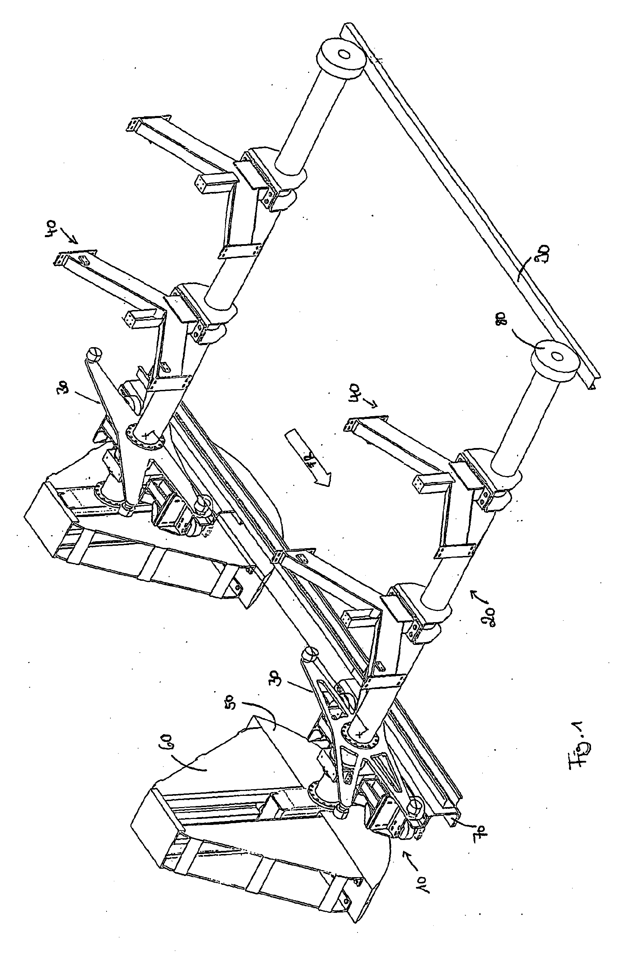

Eine schematische Gesamtansicht einer erfindungsgemäßen Anlage ist in Fig. 1 dargestellt.

Mit Hilfe dieser Anlage können Werkstücke durch eine Bearbeitungsstation hindurch transportiert werden. Insbesondere kann eine solche Anlage dazu dienen, Karosserieteile durch ein Tauchbad hindurch zu führen, um diese zu lackieren. Dazu weist die Anlage mehrere Werkstückträger auf, von denen in Fig. 1 zwei dargestellt sind und die jeweils durch einen Transportwagen 10 und eine Drehwelle 20 als wesentliche Bestandteile gebildet werden.

Die Drehwellen 20 weisen ihrerseits jeweils Gestelle 40 auf, an denen die zu lackierenden Karosserieteile direkt oder über sogenannte Skids anbringbar sind. Die Drehwellen 20 sind an den Transportwagen 10 drehbar gelagert und bewegen sich zusammen mit den Transportwagen 10 in einer durch "FR" gekennzeichneten Förderrichtung an einer Führungsbahn 70 entlang. Dazu werden die Transportwagen 10 beispielsweise mittels einer Förderkette, eines Seils oder eines Riemens angetrieben. Ein (nicht dargestelltes) Tauchbad, in das die an den Gestellen 40 angebrachten Karosserieteile zum Lackieren eingetaucht werden sollen, befindet sich neben der Führungsbahn 70 und unterhalb der Ebene, in der sich die Drehwellen 20 bewegen; die Drehwellen 20 werden somit mittels der Transportwagen 10 über das Tauchbad hinweg geführt.

Um die Karosserieteile nun in das Tauchbad einzutauchen, während sich die Drehwellen 20 über das Tauchbad hinweg bewegen, ist ein Mechanismus vorgesehen, mittels dessen die Drehwelle 20 während der Translationsbewegung von Transportwagen 10 und Drehwelle 20 entlang der Führungsbahn 70 in Drehung versetzt werden kann. In der in Fig. 1 dargestellten Ausführungsform ist dieser Mechanismus ein Rollenhebel 30. Dieser ist drehstarr mit der Drehwelle 20 verbunden oder zeitweilig verbindbar und versetzt die Drehwelle 20 in Drehung, sobald sich diese in einer geeigneten Position über dem Tauchbad befindet, so dass das zu lackierende Karosserieteil an den Gestellen 40 in das Tauchbad hinein gedreht und gleichzeitig durch das Tauchbad hindurch gezogen wird, da sich der Transportwagen 10 kontinuierlich weiter entlang der Führungsbahn 70 bewegt.

Selbstverständlich ist auch eine diskontinuierliche Arbeitsweise dieser Anlage denkbar, in der beispielsweise die Bewegung des Transportwagens 10 entlang der Führungsbahn 70 unterbrochen wird, um das Karosserieteil in das Tauchbad einzutauchen. Dies kann bei bestimmten Geometrien der Karosserieteile oder bestimmten Randbedingungen des Lackiervorgangs wünschenswert sein. Die Auswahl zwischen einer kontinuierlichen und einer diskontinuierlichen Arbeitsweise trifft der Fachmann unter Berücksichtigung all dieser Gegebenheiten.

In jedem Fall kann die Führungsbahn 70 eine endlose Schleife bilden. Eine bestimmte Stelle dieser Schleife bildet eine Startposition, an der das Karosserieteil mit oder ohne Zwischenschaltung eines Skids an den Gestellen 40 der Drehwelle 20 angebracht wird. Dann wird es entlang einer Bearbeitungsstrecke der Führungsbahn 70 durch das Tauchbad hindurch befördert und an einer Übergabeposition von den Gestellen 40 gelöst und zur weiteren Bearbeitung abtransportiert. Der Transportwagen 10 mit der unbeladenen Drehwelle 20 wird dann entlang einer Rückführstrecke der endlosen Führungsbahn 70 in die Ausgangsposition zurückgeführt. Die Rückführstrecke der Führungsbahn 70 kann dabei neben der Bearbeitungsstrecke verlaufen und über Umlenkbereiche an diese angeschlossen sein.

Aus Fig. 1 wird nun insbesondere auch deutlich, dass die die erfindungsgemäße Anlage nur eine einzige Führungsbahn 70 benötigt und die Drehwelle 20 erfindungsgemäß nur an ihrem ersten Ende an dem Transportwagen 10 gelagert und so in Förderrichtung FR angetrieben ist, wohingegen ihr zweites, freies Ende passiv mitgeführt wird. Dies erfolgt im Gegensatz zu herkömmlichen Anlagen, in denen beide Enden der Drehwelle entlang jeweils einer Führungsbahn geführt sind. In der dargestellten Ausführungsform ist dieses zweite, freie Ende der Drehwelle 20 lediglich mit einer nicht angetriebenen Stützrolle 80 versehen, die auf einer Stützfläche 90 abrollt.

Diese Stützfläche 90 kann beispielsweise durch den ohnehin vorhandenen Rand des Tauchbads gebildet werden. Die Stützrolle 80 oder ein entsprechendes Stützelement ist aber nicht unbedingt erforderlich; bei geeigneter Auslegung der restlichen Bauelemente kann sich das freie Ende der Drehwelle 20 auch frei im Raum bewegen.

Beim Ein- und Ausdrehen der Werkstücke in das und aus dem Tauchbad entstehen hohe Drehmomente an der Drehwelle 20, die über die Drehwelle 20 und den Transportwagen 10 auf die Führungsbahn 70 abgestützt werden müssen und die beim Eindrehen zusätzliche Schubkräfte und beim Ausdrehen zusätzliche Zugkräfte für die Förderketten erzeugen. Das gesamte System ist dadurch starken und ständig schwankenden Belastungen ausgesetzt.

Diese Drehmomente können auf verschiedene Art und Weise kompensiert werden. In der Ausführungsform der Fig. 1 ist dazu ein Gegengewicht 50 an einem Träger 60 vorgesehen, der seinerseits an dem den Gestellen 40 abgewandten Ende der Drehwelle 20 gelagert ist. Durch die Anordnung des Gegengewichts 50 in einem bestimmten Abstand zur Drehachse der Drehwelle 20 wird das Drehmoment des Werkstücks zumindest teilweise kompensiert.

Dabei kann der Abstand des Gegengewichts 50 von dieser Drehachse variabel sein. Dies ergibt sich ebenfalls aus Fig. 1. Bei dem rechts dargestellten Werkstückträger ist das Gegengewicht relativ weit von der Drehachse der Drehwelle 20 entfernt und könnte so das Drehmoment eines an den zugehörigen Gestellen 40 angebrachten Werkstücks ausgleichen. Bei dem links dargestellten Werkstückträger ist das Gegengewicht 50 dagegen in die Achse der Drehwelle 20 verschoben und übt so kein Kompensationsdrehmoment aus.

Diese letztgenannte Stellung wird insbesondere eingenommen, wenn der Werkstückträger entlang der Führungsbahn 70 befördert wird. Dann sollte das Gegengewicht 50 neutralisiert werden. Das kann alternativ auch durch Entkoppeln des Gegengewichts 50 von der Drehachse geschehen oder durch Entkoppeln des Rollenhebels 30 von der Drehachse.

Mit der Kompensation der Drehmomente werden die auf die Förderkette einwirkenden Kräfte wesentlich reduziert und die Belastungsschwankungen reduziert. Die Lösungen zur Kompensation der Drehmomente unterstützen damit gleichzeitig die Beschränkung auf einen einzigen Ketten- bzw. Seil- oder Riemenstrang.

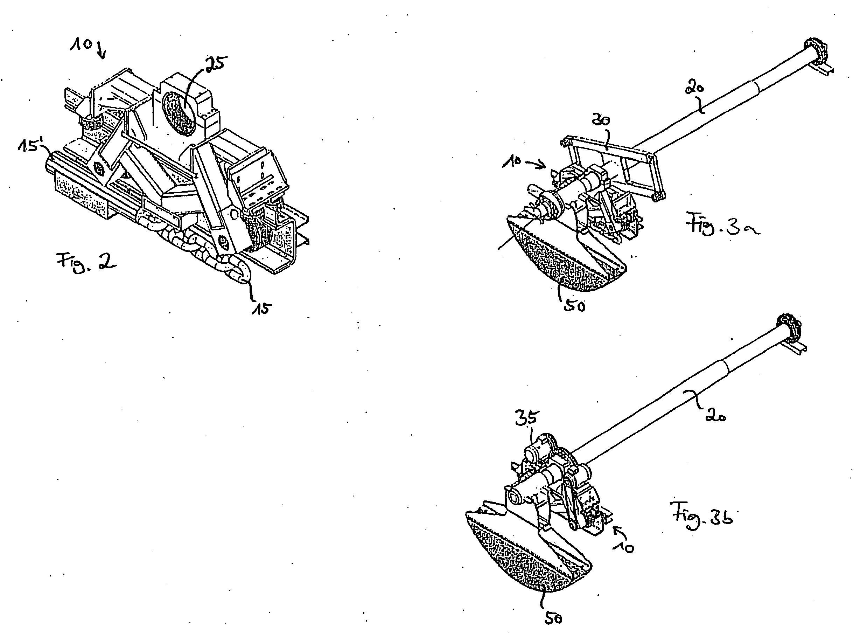

Fig. 2 zeigt eine erste Ausführungsform eines Transportwagens 10, der in einer erfindungsgemäßen Anlage verwendbar ist. In Fig. 2a ist auch angedeutet, dass der Förderwagen 10 mittels einer Förderkette 15 oder eines Seils 15' an der Führungsbahn 70 entlang bewegbar ist. Eine Aufnahme 25 dient zur Lagerung der Drehwelle 20.

Fig. 3a zeigt den in Fig. 2 dargestellten Transportwagen 10 in Kombination mit einer Drehwelle 20. Ebenfalls dargestellt ist der bereits mit Bezug auf Fig. 1 beschriebene Rollenhebel 30, dessen Bewegung die Drehwelle 20 während der Förderbewegung des Transportwagens 10 an einer Führungsbahn entlang in Drehung versetzt.

Alternativ kann die Drehwelle 20 aber auch unabhängig von der Förderbewegung, beispielsweise mittels elektrischer Hilfsenergie, angetrieben sein und entsprechende mechanische und/oder hydraulische bzw. pneumatische Übertragungselemente besitzen. Dieser Drehmechanismus kann durch eine entsprechende Steuerung beliebig geschaltet sowie in Bezug auf Drehrichtung und -geschwindigkeit verändert werden. Dies ist in Fig. 3b dargestellt: Statt des Rollenhebels 30 ist hier ein elektrischer Antrieb 35 vorgesehen, der die Drehbewegung der Drehwelle 20 unabhängig von der Förderbewegung erzeugt.

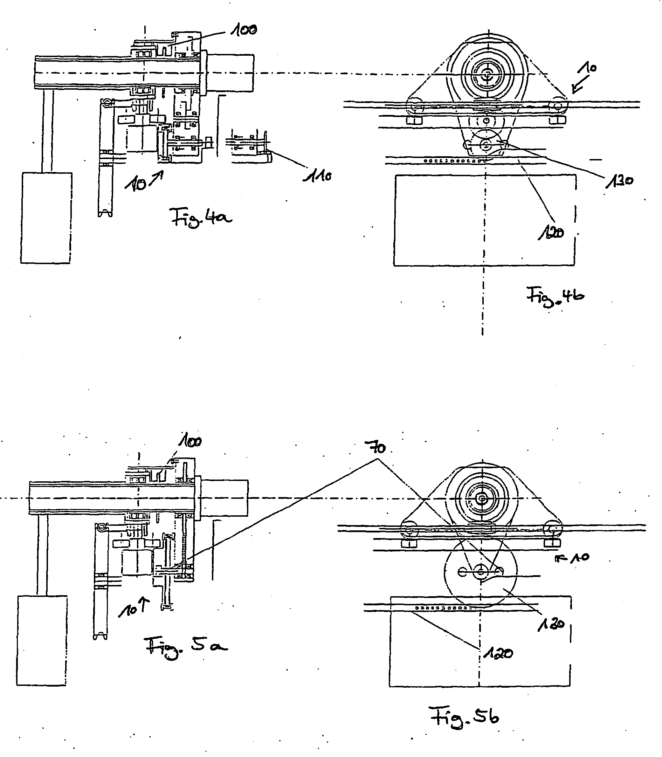

Die Drehbewegung der Drehwelle 20 kann anstelle mittels des Rollenhebels 30 auch mittels der in Fig. 4a, 4b und 5a, 5b dargestellten und im folgenden beschriebenen Drehmechanismen auf flexible Art und Weise ermöglicht werden, nämlich mittels eines Stirnradgetriebes (Fig. 4a, 4b) oder Kettengetriebes (Fig. 5a, 5b), das am Transportwagen 10 angeordnet ist und mittels einer Zahnstangen-Ritzel-Paarung (120, 130) über die von der Kette eingeleitete Förderbewegung des Transportwagens 10 angetrieben wird.

Die Drehgeschwindigkeit kann dabei mittels einer Getriebeschaltung oder durch Verändern des Ritzeldurchmessers geändert werden. Insbesondere kann auch die Drehrichtung über eine Getriebeschaltung oder durch Verändern der Anordnung der Zahnstange bezüglich des Ritzels (oberhalb - unterhalb) geändert werden. Haltepositionen der Drehwelle sind durch das Entkoppeln des Antriebes oder das Unterbrechen der Zahnstange 120 realisierbar. Die Bezugsziffer 100 in Fig. 4a und 5a bezeichnet eine Scheibenbremse, 110 eine Klinkenkupplung.

Der Vorteil dieser Getriebe ist, dass die Drehgeschwindigkeit nicht unbedingt 1:1 an die Fördergeschwindigkeit des Transportwagens 10 gekoppelt ist.

All diese Möglichkeiten zur Erzeugung der Drehung der Drehwelle 20 sind an sich bekannt und werden hier daher nicht genauer beschrieben.

Wie bereits beschrieben, zeichnet sich die erfindungsgemäße Anlage dadurch aus, dass die Drehwelle 20 nur an einem Ende am Transportwagen 10 gelagert ist, das andere Ende ist frei. Dies führt zu einer Reihe von Vorteilen. Insbesondere kann die Drehwelle 20 aufgrund ihres freien Endes im unbeladenen Zustand, auch und vor allem für ihre Rückführung, auf verschiedene Arten und Weisen verschwenkt werden, so dass die Rückführung besonders platzsparend stattfinden kann.

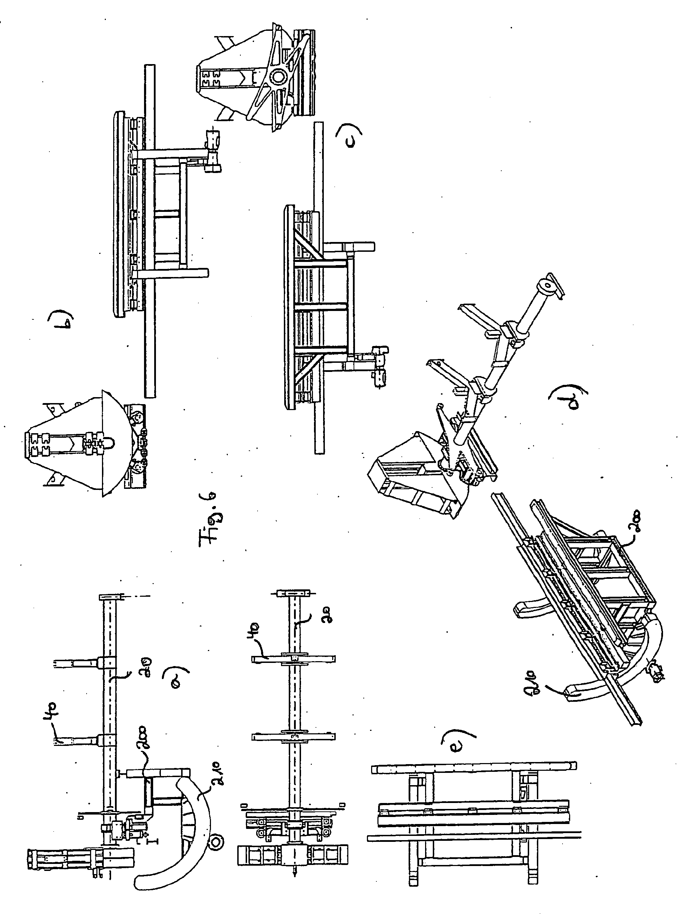

Dazu kann einerseits der gesamte, aus Transportwagen 10 und Drehwelle 20 bestehende Werkstückträger um einen Gelenkpunkt herum verschwenkt werden, der im Kopplungsbereich zwischen Kette und Werkstückträger angeordnet ist, und zwar entweder mittels eines gesonderten Schwenkmechanismus oder mittels in wendelförmig ausgebildeten Führungsbahnen laufender und am Karosserieträger befestigter Rollen. Fig. 6 zeigt einen solchen gesonderten Schwenkmechanismus: Der gesamte Transportwagen 10 wird mitsamt eines Schwenkgestells 200 gegenüber stationären Kreisbogenbahnen 210 verschwenkt. In der Ausführungsform der Fig. 6 ist eine Verschwenkung um 45° möglich. Dabei ist Fig. 6a eine Seitenansicht, Fig. 6b eine Ansicht von hinten, Fig. 6c eine Ansicht von vorn, Fig. 6d eine perspektivische Ansicht, und Fig. 6e eine Draufsicht.

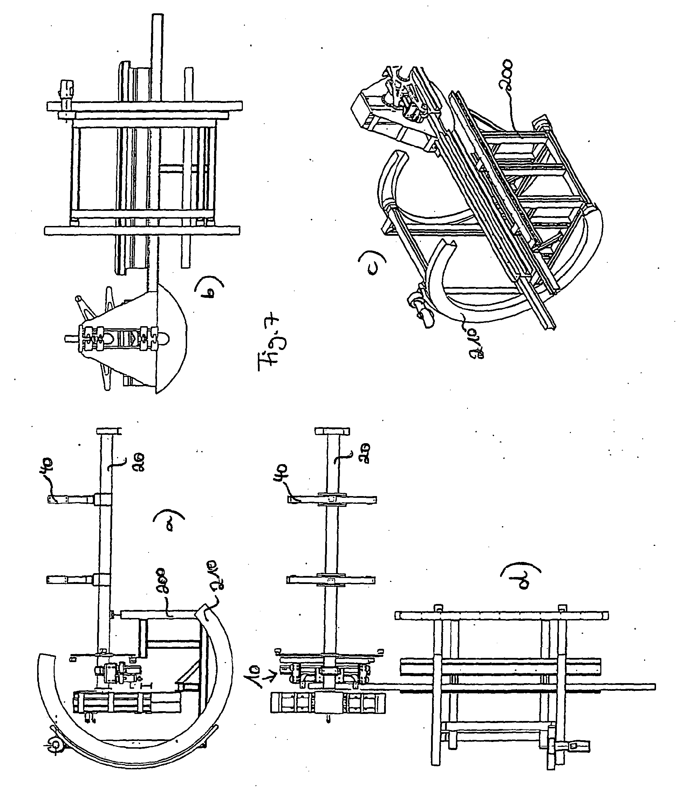

Der Schwenkmechanismus der Fig. 7 gleicht dem in Fig. 6 dargestellten. Fig. 7a ist eine Seitenansicht, Fig. 7b eine Ansicht von hinten, Fig. 7c eine perspektivische Ansicht, und Fig. 7d eine Draufsicht. Der Schwenkmechanismus der Fig. 7 ermöglicht aber ein Verschwenken um 90°. Dies geschieht wie folgt: nachdem das Werkstück an den Gestellen 40 durch das Tauchbad hindurch befördert und an der Übergabestation von den Gestellen 40 gelöst worden ist, werden der Transportwagen 10 zusammen mit der leeren Drehwelle 20 in die in Fig. 7 dargestellte Schwenkstation gefahren und dort zusammen mit dem Schwenkgestell 200 um 90° verschwenkt, so dass die Drehwelle 20 nach unten zeigt. Mit dieser Ausrichtung der Drehwelle 20 kann der Transportwagen 10 dann durch einen (nicht dargestellten) Umlenkbereich der Führungsbahn auf die Rückführstrecke der Führungsbahn gefahren werden. Während der Rückführung des Transportwagens 10 verbleibt die Drehwelle 20 in dieser nach unten weisenden Stellung, so dass deutlich weniger Platz notwendig ist, als wenn die Welle in ihrer waagerechten Ausrichtung zurückgeführt würde - wie es bei den herkömmlichen Anlagen der Fall ist, bei denen die Welle an beiden Enden gelagert ist und daher stets waagerecht befördert wird. Bevor in der Ausgangsposition eine neue Karosserie an den Gestellen 40 der Drehwelle 20 befestigt wird, wird der Transportwagen 10 mit der Drehwelle 20 in einer weiteren Schwenkstation erneut verschwenkt, so dass die Drehwelle 20 wieder ihre waagerechte Position einnimmt.

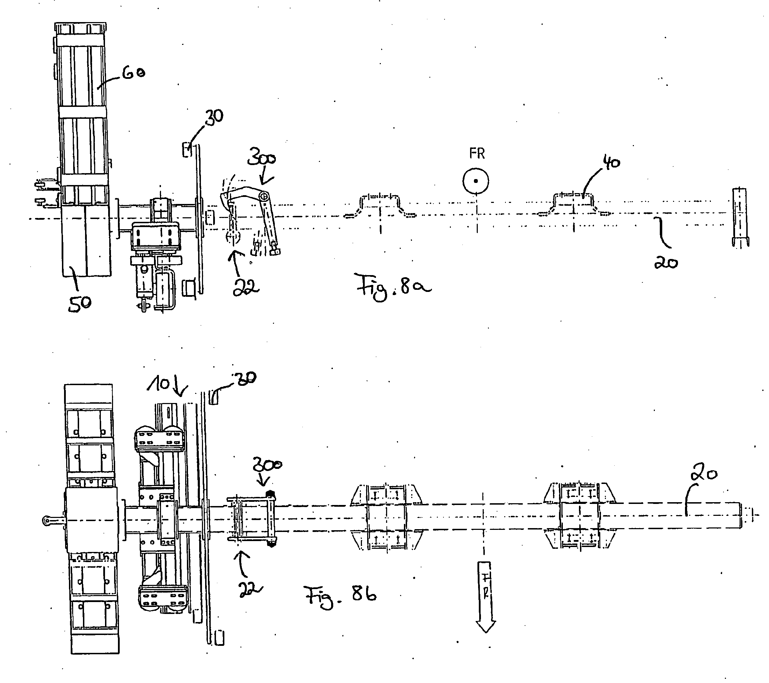

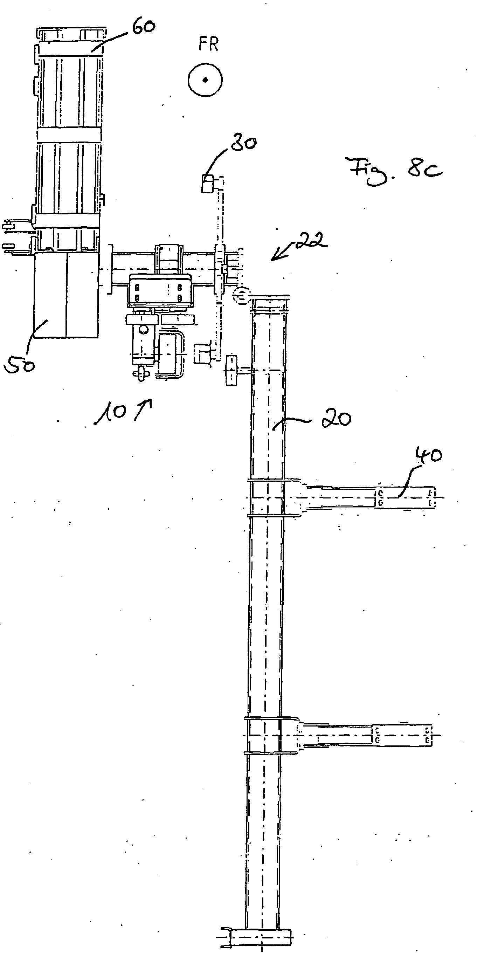

Eine Alternative zu den Schwenkstationen besteht darin, die Drehwelle 20 selbst klappbar auszugestalten. Dies ist in Fig. 8 dargestellt. Fig. 8a und 8b zeigen die Drehwelle 20 in ihrer waagerechten Position. Nach dem Entriegeln einer Arretiervorrichtung 300 kann die Welle in einem Schwenkbereich 22 nach unten abgeklappt werden. Die um 90° nach unten abgeklappte Stellung ist in Fig. 8c dargestellt. Im Gegensatz zu der Ausführungsform der Fig. 6 und 7 werden hier nicht der komplette Transportwagen 10 samt der Drehwelle 20 verschwenkt, sondern nur der in Fig. 8 rechts angeordnete, größte Teil der Drehwelle 20. Damit kann die Drehwelle 20 ebenfalls für ihre Umlenkung und Rückführung entlang der Führungsbahn in eine vertikal nach unten weisende Stellung gebracht werden. Das Aus- und Einklappen der Drehwelle 20 am Scharnier 22 wird durch Gestalten einer Kurvenbahn, der Scharnierlage und des Eigengewichts des Drehwellenteilstücks ohne Fremdantrieb realisiert.

Außerdem ist es mit dieser klappbaren Ausgestaltung der Drehwelle 20 auch möglich, die Drehwelle 20 auf der Rückführstrecke aus der vertikal nach unten weisenden in eine Ausrichtung parallel zur Rückführstrecke zu schwenken, was den Raumbedarf für die Drehwelle 20 auf der Rückführstrecke noch weiter vermindert. Der Schwenkvorgang wird auch hier entweder mittels eines gesonderten Schwenkmechanismus' oder mittels in wendelförmig ausgebildeten Führungsbahnen laufender und am Werkstückträger befestigter Rollen ermöglicht, oder aber durch Gestalten einer entsprechenden Drehhebelführungsbahn, die den Schwenkvorgang der Drehwelle realisiert.

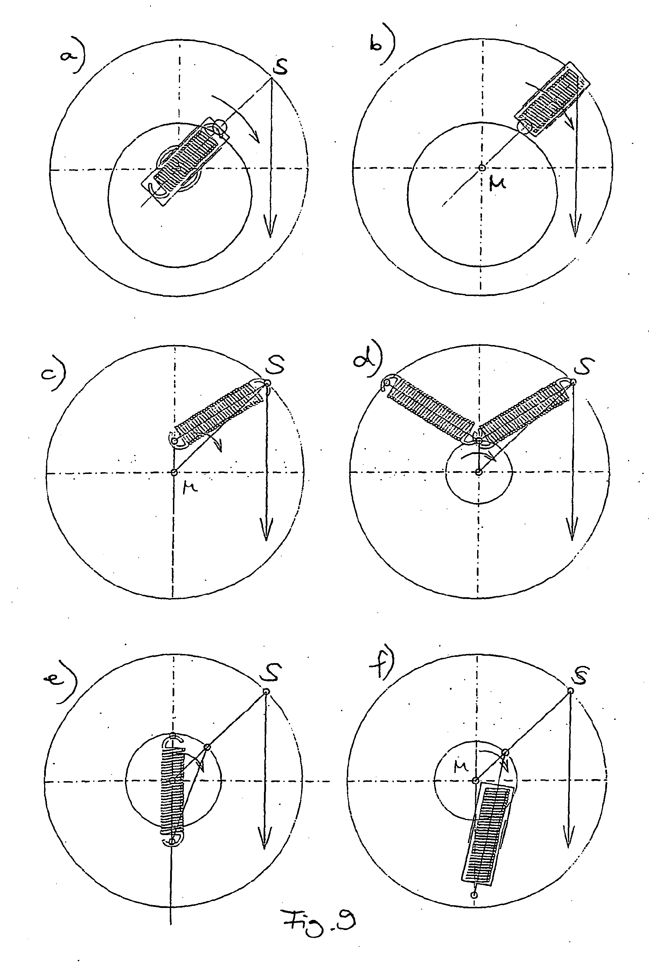

Mit Bezug auf Fig. 9 wird nun noch verdeutlicht, dass das Drehmoment des Werkstücks um die Drehachse der Drehwelle 20 statt mittels eines Gegengewichts 50 zumindest teilweise durch einen Hebel-Feder-Mechanismus kompensiert werden kann, bei dem Federn beim Eindrehen des Werkstücks in das Tauchbad gespannt werden und so dem Drehmoment des Werkstücks entgegenwirken. Das für das Ausdrehen des Werkstücks notwendige Drehmoment wird dann durch die sich entspannenden Federn entsprechend reduziert.

Wenn der Werkstückträger einmal unbeladen durch die Behandlungsstrecke befördert wird, muss die Wirkung des Hebel-Feder-Mechanismus, ebenso wie das oben beschriebene Gegengewicht, neutralisiert werden. Das kann wie folgt realisiert werden:
- Entkoppeln des Hebel-Feder-Mechanismus von der Drehachse des Werkstückträgers,
- Entkoppeln der Elemente des Drehmechanismus' (z.B. beim Drehen mittels in Führungsbahnen laufender Rollenhebel) gegenüber der Drehachse des Werkstückträgers, oder
- Ausschalten des Drehmechanismus.

Fig. 9 a) und b) zeigen einen Hebel-Federmechanismus mit Kurvenscheibe, Fig. 9 c) und d) mit exzentrisch angelenkten Federn, und Fig. 9 e) und f) mit Schubkurbel bzw. Kurbelschleife. Hierbei ist M die Drehachse der Drehwelle und S der Angriffspunkt der Gewichtskraft des Werkstücks an der Drehwelle.

## Patentansprüche

1. Anlage zum Befördern eines Werkstücks entlang einer Behandlungsstrecke, mit
zumindest einem Transportwagen (10), der in einer Förderrichtung (FR) entlang der Behandlungsstrecke bewegbar ist,
sowie einer Drehwelle (20), die an dem Transportwagen (10) in der Nähe eines ersten ihrer Enden und im rechten Winkel zur Förderrichtung (FR) um ihre Achse drehbar gelagert ist und an der eine Halterung (40) für das zu behandelnde Werkstück vorgesehen ist,
**dadurch gekennzeichnet, dass**
die Drehwelle (20) nur in der Nähe ihres ersten Endes an dem Transportwagen (10) gelagert ist und so in Förderrichtung (FR) antreibbar ist, wohingegen ihr zweites, freies Ende passiv in Förderrichtung (FR) mitbewegt wird.

2. Anlage nach Anspruch 1, in welcher die Drehwelle (20) so angeordnet ist, dass sie zumindest teilweise in einer im rechten Winkel zur Förderrichtung (FR) verlaufenden Ebene verschwenkbar ist.

3. Anlage nach Anspruch 2, in welcher der Transportwagen (10) zusammen mit der gesamten Drehwelle (20) in dieser Ebene verschwenkbar angeordnet ist.

4. Anlage nach Anspruch 2 oder 3, in welcher die Drehwelle (20) einen Klappmechanismus (22, 300) aufweist, mittels dessen das zweite Ende der Drehwelle (20) in dieser Ebene verschwenkbar ist.

5. Anlage nach einem der Ansprüche 2 bis 4, in welcher die Drehwelle (20) um zumindest 45° verschwenkbar ist.

6. Anlage nach Anspruch 5, in welcher die Drehwelle (20) um 90° verschwenkbar ist.

7. Anlage nach einem der vorangehenden Ansprüche, wobei das zweite Ende der Drehwelle (20) mit einem nicht angetriebenen Stützelement (80) versehen ist, das auf einer Stützfläche (90) ablaufen kann.

8. Anlage nach einem der vorhergehenden Ansprüche, weiter umfassend eine Führungsbahn (70), an der der Transportwagen (10) in Förderrichtung (FR) entlang bewegbar ist.

9. Anlage nach einem der vorangehenden Ansprüche, in welcher der Transportwagen (10) mittels einer Förderkette, eines Riemens oder eines Seiltriebs in Förderrichtung (FR) angetrieben ist.

10. Anlage nach einem der vorangehenden Ansprüche, in welcher die Drehbewegung der Drehwelle (20) um ihre Achse über einen Drehantrieb (30) mit der Bewegung des Transportwagens (10) in Förderrichtung (FR) gekoppelt ist.

11. Anlage nach Anspruch 10, in welcher der Drehantrieb (30) ein Rollenhebel ist.

12. Anlage nach einem der Ansprüche 1 bis 9, in welcher die Drehung der Drehwelle (20) um ihre Achse mittels eines separaten Drehantriebs (35) erzeugt wird.

13. Anlage nach Anspruch 12, in welcher der separate Drehantrieb (35) ein elektrischer Antrieb ist.

14. Anlage nach einem der vorhergehenden Ansprüche, weiter umfassend Mittel zur Kompensation des Drehmoments, das durch das an der Drehwelle (20) angebrachte Werkstück erzeugt wird.

15. Anlage nach Anspruch 14, in welcher ein Gegengewicht (50) am ersten Ende der Drehwelle (20) zur Kompensation des Drehmoments vorgesehen ist.

16. Anlage nach Anspruch 15, in welcher das Gegengewicht (50) über einen Träger (60) so an dem ersten Ende der Drehwelle (20) angebracht ist, dass sein Abstand zur Drehachse der Drehwelle (20) variabel ist.

17. Anlage nach Anspruch 14, in welcher ein Hebel-Feder-Mechanismus zur Kompensation des Drehmoments vorgesehen ist.

18. Verfahren zum Befördern eines Werkstücks entlang einer Behandlungsstrecke, mit den folgenden Schritten:
- Verfahren eines Transportwagens (10) in eine Ausgangsposition,
- Anbringen eines zu behandelnden Werkstücks an einer Drehwelle (20), die im Bereich eines ersten ihrer Enden drehbar an dem Transportwagen (10) gelagert ist,
- Befördern des Transportwagens (10) entlang einer Behandlungsstrecke in einer Förderrichtung (FR), wobei die Drehwelle (20) rechtwinklig zu dieser Förderrichtung (FR) ausgerichtet ist,
- Lösen des Werkstücks von der Drehwelle (20) in einer Übergabeposition,
- Verschwenken der Drehwelle (20) in einer im rechten Winkel zur Förderrichtung verlaufenden Ebene, und
- Zurückführen des Transportwagens (10) mit der Drehwelle (20) in die Ausgangsposition.

19. Verfahren nach Anspruch 18, in welchem die gesamte Drehwelle (20) zusammen mit dem Transportwagen (10) in dieser Ebene verschwenkt wird.

20. Verfahren nach Anspruch 19, in welchem der Transportwagen (10) während des Verschwenkens oder anschließend an das Verschwenken auf eine Rückführstrecke umgelenkt wird, dort zurückgeführt wird und zum Erreichen der Ausgangsposition wiederum umgelenkt und in seine ursprüngliche Position verschwenkt wird.

21. Verfahren nach Anspruch 18, in welchem nur ein Teilbereich der Drehwelle (20), der das zweite Ende der Drehwelle einschließt, in dieser Ebene verschwenkt wird.

22. Verfahren nach Anspruch 20, in welchem der Teilbereich der Drehwelle (20) während des Verschwenkens oder anschließend an das Verschwenken auf eine Rückführstrecke umgelenkt wird, für die Rückführung parallel zur Förderrichtung (FR) ausgerichtet wird, und zum Erreichen der Ausgangsposition wiederum umgelenkt und in seine ursprüngliche Position verschwenkt wird.

## Claims

1. Unit for conveying a workpiece along a processing run, comprising
at least one transport car (10), movable along the processing run in a conveying direction (FR),
and a rotating shaft (20), mounted on the transport car (10), close to a first of the ends thereof, to rotate about the axis thereof at right angles to the conveying direction (FR) and on which a mounting (40) for the workpiece to be processed is provided,
**characterized in that**
the rotating shaft (20) is only mounted close to the first end thereof on the transport car (10) and may thus be driven in the conveying direction (FR), whereas the second free end thereof is moved along passively in the conveying direction.

2. Unit according to claim 1, wherein the rotating shaft (20) is arranged in such a manner that it may at least in part be pivoted in a plane running at right angles to the conveying direction (FR).

3. Unit according to claim 2, wherein the transport car (10) is arranged together with the entire rotating shaft (20) to be pivotable in said plane.

4. Unit according to claim 2 or 3, wherein the rotating shaft (20) comprises a folding mechanism (22, 300), by means of which the second end of the rotating shaft (20) is pivotable in said plane.

5. Unit according to one of claims 2 to 4, wherein the rotating shaft (20) is pivotable by at least 45°.

6. Unit according to claim 5, wherein the rotating shaft (20) is pivotable by 90°.

7. Unit according to one of the preceding claims, with the second end of rotating shaft (20) being provided with a non-driven support element (80) which can run on a support surface (90).

8. Unit according to one of the preceding claims, further including a guiding way (70), along which the transport car (10) is movable in the conveying direction (FR).

9. Unit according to one of the preceding claims, wherein the transport car (10) is driven in the conveying direction (FR) by means of a conveying chain, a belt or a rope drive.

10. Unit according to one of the preceding claims, wherein the rotating movement of the rotating shaft (20) around its axis is coupled to the movement of the transport car (10) in the conveying direction (FR) via a rotating drive (30).

11. Unit according to claim 10, wherein the rotating drive (30) is a roller lever.

12. Unit according to one of claims 1 to 9, wherein the rotation of the rotating shaft (20) around its axis is created by means of a separate rotating drive (35).

13. Unit according to claim 12, wherein the separate rotating drive (35) is an electric drive.

14. Unit according to one of the preceding claims, further including means for compensating the torque created by the workpiece which is mounted on the rotating shaft (20).

15. Unit according to claim 14, wherein a counter-weight (50) is provided at the first end of rotating shaft (20) for compensating the torque.

16. Unit according to claim 15, wherein the counter-weight (50) is fixed to the first end of the rotating shaft (20) via a carrier (60) in such a manner that the distance thereof to the rotating axis of the rotating shaft (20) is variable.

17. Unit according to claim 14, wherein a lever-spring mechanism is provided for compensating the torque.

18. Method for conveying a workpiece along a processing run, comprising the following steps:
- moving a transport car (10) in a starting position,
- fixing a workpiece which is to be processed on a rotating shaft (20) which is rotatably supported on said transport car (10) in the area of a first of its ends,
- conveying said transport car (10) along a processing run in a conveying direction (FR), with the rotating shaft (20) being oriented at right angles to said conveying direction (FR),
- detaching the workpiece from the rotating shaft (20) in a disposal position,
- pivoting the rotating shaft (20) in a plane running at right angles to the conveying direction, and
- returning the transport car (10) with the rotating shaft (20) into the starting position.

19. Method according to claim 18, wherein the entire rotating shaft (20) is pivoted in said plane together with the transport car (10).

20. Method according to claim 19, wherein during pivoting or following pivoting the transport car (10) is diverted to a return run, is returned there and again diverted in order to reach the starting position and is pivoted into its original position.

21. Method according to claim 18, wherein only a partial area of the rotating shaft (20) which includes the second end of the rotating shaft is pivoted in said plane.

22. Method according to claim 20, wherein the partial area of the rotating shaft (20) is diverted during pivoting or following pivoting to a return run, is oriented in parallel with the conveying direction (FR) for return and is again diverted in order to reach the starting position and is pivoted into its original position.

## Revendications

1. Installation pour transporter une pièce d'oeuvre le long d'un parcours de traitement, avec
au moins un chariot de transport (10), déplaçable dans une direction de transport (FR), le long du parcours de traitement,
ainsi qu'un arbre rotatif (20), monté à rotation autour de son axe sur le chariot de transport (10), à proximité d'une première de ses extrémités, et à angle droit par rapport à la direction de transport (FR), et sur lequel est prévue une fixation (40) pour la pièce d'oeuvre à traiter,
**caractérisé en ce que**
l'arbre rotatif (20) est monté en palier uniquement à proximité de sa première extrémité sur le chariot de transport (10) et est ainsi susceptible d'être entraîné dans la direction de transport (FR), alors que, par contre, sa deuxième extrémité libre est entraînée, conjointement, de façon passive, dans la direction de transport (FR).

2. Installation selon la revendication 1, dans laquelle l'arbre rotatif (20) est disposé de manière qu'il soit susceptible d'être pivoté, au moins partiellement, dans un plan s'étendant à angle droit par rapport à la direction de transport (FR).

3. Installation selon la revendication 2, dans laquelle le chariot de transport (10) est disposé, conjointement avec l'ensemble de l'arbre rotatif (20), de façon à pouvoir pivoter dans ce plan.

4. Installation selon la revendication 2 ou 3, dans laquelle l'arbre rotatif (20) présente un mécanisme à rabattement (22, 300), au moyen duquel la deuxième extrémité de l'arbre rotatif (20) est susceptible de pivoter dans ce plan.

5. Installation selon l'une des revendications 2 à 4, dans laquelle l'arbre rotatif (20) est susceptible de pivoter d'au moins 45°.

6. Installation selon la revendication 5, dans laquelle l'arbre rotatif (20) est susceptible de pivoter de 90°.

7. Installation selon l'une des revendications précédentes, la deuxième extrémité de l'arbre rotatif (20) étant munie d'un élément d'appui (80) non entraîné, pouvant se déplacer sur une surface d'appui (90).

8. Installation selon l'une des revendications précédentes, comprenant en outre une piste de guidage (70), sur laquelle le chariot de transport (10) est déplaçable dans la direction de transport (FR).

9. Installation selon l'une des revendications précédentes, dans laquelle le chariot de transport (10) est entraîné dans la direction de transport (FR), au moyen d'une chaîne de transport, d'une courroie ou d'une transmission à câble.

10. Installation selon l'une des revendications précédentes, dans laquelle le mouvement rotatif de l'arbre rotatif (20) autour de son axe est couplé, par l'intermédiaire d'un entraînement en rotation (30), au mouvement du chariot de transport (10), dans la direction de transport (FR).

11. Installation selon la revendication 10, dans laquelle l'entraînement en rotation (30) est un levier à rouleau.

12. Installation selon l'une des revendications 1 à 9, dans laquelle la rotation de l'arbre rotatif (20) autour de son axe est produite au moyen d'un entraînement en rotation (35) séparé.

13. Installation selon la revendication 12, dans laquelle l'entraînement en rotation (35) séparé est un entraînement électrique.

14. Installation selon l'une des revendications précédentes, comprenant en outre des moyens pour la compensation du couple de rotation, produit par la pièce d'oeuvre montée sur l'arbre rotatif (20).

15. Installation selon la revendication 14, dans laquelle un contrepoids (50) est prévu à la première extrémité de l'arbre rotatif (20), pour assurer la compensation du couple de rotation.

16. Installation selon la revendication 15, dans laquelle le contrepoids (50) est monté, par l'intermédiaire d'un support (60, sur la première extrémité de l'arbre rotatif (20), de manière que son espacement par rapport à l'axe de rotation de l'arbre rotatif (20) soit variable.

17. Installation selon la revendication 14, dans laquelle un mécanisme à ressort et levier est prévu pour la compensation du couple de rotation.

18. Procédé de transport d'une pièce d'oeuvre le long d'un parcours de traitement, présentant les étapes suivantes :
- déplacement d'un chariot de transport (10) en une position initiale,
- montage d'une pièce d'oeuvre à traiter sur un arbre rotatif (20), monté en palier dans la zone d'une première de ses extrémités, de façon à pouvoir tourner sur le chariot de transport (10),
- transport du chariot de transport (10) le long d'un parcours de traitement, dans une direction de transport (FR), l'arbre rotatif (20) étant orienté à angle droit par rapport à cette direction de transport (FR),
- détachement de la pièce d'oeuvre de l'arbre rotatif (20), en une position de transfert,
- pivotement de l'arbre rotatif (20) dans un plan, s'étendant à angle droit par rapport à la direction de transport, et
- retour du chariot de transport (10) avec l'arbre rotatif (20), à la position initiale.

19. Procédé selon la revendication 18, dans lequel l'ensemble de l'arbre rotatif (20), conjointement avec le chariot de transport (10), est pivoté dans ce plan.

20. Procédé selon la revendication 19, dans lequel le chariot de transport (10), pendant le pivotement ou à la suite du pivotement, est dévié sur un parcours de retour, y est retourné et, pour atteindre la position initiale, est de nouveau dévié et pivoté à sa position initiale.

21. Procédé selon la revendication 18, dans lequel seule une zone partielle de l'arbre rotatif (20), qui inclut la deuxième extrémité de l'arbre rotatif, est pivotée dans ce plan.

22. Procédé selon la revendication 20, dans lequel la zone partielle de l'arbre rotatif (20), pendant le pivotement ou suite au pivotement, est déviée sur un parcours de retour, est orientée parallèlement à la direction de transport (FR) pour le retour, et est déviée, de nouveau, pour atteindre la position initiale et est pivotée pour être placée à sa position initiale.
